# EUROPÄISCHE PATENTSCHRIFT

(11) **EP 2 607 999 B1**
(45) Veröffentlichungstag und Bekanntmachung des Hinweises auf die Patenterteilung: **18.10.2017**
(21) Anmeldenummer: 11010194.6
(22) Anmeldetag: 23.12.2011
(51) Int. Cl.: G06F 3/0488

(54) **Verfahren zur Steuerung eines elektrischen Geräts, insbesondere eines tragbaren elektrischen Geräts, elektrisches Gerät, Computerprogramm und Computerprogrammprodukt**
Method for controlling an electric device, in particular a portable electric device, electric device, computer program and computer program product
Procédé de commande d'un appareil électrique, notamment d'un appareil électrique portatif, appareil électrique, programme informatique et produit de programme informatique

(43) Veröffentlichungstag der Anmeldung: 26.06.2013
(73) Patentinhaber: Deutsche Telekom AG, 53113 Bonn (DE)
(72) Erfinder: Bubenzer, Klaas, 53121 Bonn (DE); Lihs, Martin, 99423 Weimar (DE)
(74) Vertreter: Schwöbel, Thilo K.

(56) Entgegenhaltungen:
- WO-A1-2008/133505
- US-A1- 2002 056 575
- US-A1- 2010 149 115
- US-A1- 2010 235 794

## Beschreibung

### Stand der Technik

Die Erfindung betrifft ein Verfahren zur Steuerung eines elektrischen Geräts mittels wenigstens einer geradlinigen Eingabegeste und wenigstens einer unregelmäßigen Eingabegeste. Bei dem elektrischen Gerät handelt es sich insbesondere um ein tragbares elektrisches Gerät, insbesondere ausgebildet als intelligentes Telefongerät bzw. ein persönlicher digitaler Assistent. Die Erfindung betrifft ferner ein elektrisches Gerät mit einer berührungsempfindlichen Fläche, insbesondere ein Touchscreen, und zur Steuerung mittels wenigstens einer geradlinigen Eingabegeste und wenigstens einer unregelmäßigen Eingabegeste konfiguriert ist. Die Erfindung betrifft ferner auch ein Computerprogramm mit Programmcodemitteln sowie ein Computerprogrammprodukt mit einem computerlesbaren Medium, so dass das erfindungsgemäße Verfahren ausgeführt wird, wenn das Computerprogramm auf dem elektrischen Gerät ausgeführt wird.

Zur Steuerung von elektrischen Geräten, insbesondere tragbaren elektrischen Geräten wie tragbare Computer (Notebooks), persönliche digitale Assistenten (personal digital assistants, PDAs) oder intelligenten Telefongeräten (Smartphones), ist es heute üblich, als Benutzerschnittstelle eine berührungsempfindliche Fläche oder Oberfläche vorzusehen. Bei Notebooks werden typischerweise als Touchpad bezeichnete Felder bzw. Bereiche verwendet, welche dazu dienen, Bewegungen eines Fingers des Benutzers auf dem Feld in Zeigerbewegungen auf dem Bildschirm des Notebooks umzusetzen.

Solche berührungsempfindlichen Flächen bzw. Oberflächen weisen - insbesondere bei tragbaren Geräten - oftmals eine Bildschirmeinrichtung derart auf, dass die Bildschirmfläche und die berührungsempfindliche Fläche bzw. Oberfläche zumindest teilweise zusammenfallen, d.h. ein Bildschirminhalt sozusagen hinter der berührungsempfindlichen Oberfläche angeordnet ist. Solche Anordnungen werden auch als Touchscreen - berührungsempfindlicher Bildschirm - bezeichnet. Auf diese Weise kann der Benutzer beispielsweise allein durch Berühren von auf der Bildschirmfläche angezeigter Steuersymbole entsprechende Funktionen der jeweiligen Vorrichtung ausführen, wodurch eine sehr intuitive Steuerung ermöglicht wird.

Zur Steuerung von insbesondere tragbaren elektrischen Geräten ist es ferner üblich, Steuerungsgesten zu verwenden, d.h. Bewegungen im Sinne von Kontaktbewegungen, die beispielsweise ein Finger eines Benutzers des elektrischen Geräts auf der berührungsempfindlichen Oberfläche ausführt. Dies bedeutet, dass der Finger eines Benutzers über den gesamten Verlauf der Kontaktbewegung in Kontakt mit der berührungsempfindlichen Fläche ist und ggf. einen leichten Druck auf diese ausübt, damit die Fortsetzung der Kontaktbewegung vom elektrischen Gerät bzw. von der berührungsempfindlichen Fläche erkannt wird.

Zur Realisierung solch einer Gestensteuerung des elektrischen Geräts ist jeder Geste bzw. Eingabegeste eine jeweilige Funktion des elektrischen Geräts zugeordnet, d.h. es wird mittels verschiedener Messpunkte die Berührung der berührungsempfindlichen Fläche durch den Benutzer - beispielsweise dessen Finger - erfasst, mit verschiedenen, den hinterlegten Eingabegesten zugeordneten Berührpunktmustern verglichen, eine Entscheidung getroffen, welche der verschiedenen Eingabegesten einschlägig ist und anschließend die mit der erkannten Eingabegeste verknüpfte Funktion ausgeführt.

Bei bekannten elektrischen Geräten ist es in der Regel vorgesehen, dass einfache, insbesondere geradlinige, Gesten zur Steuerung des elektrischen Geräts verwendet werden. Diese haben den Vorteil, dass sie sich relativ leicht voneinander unterscheiden lassen und damit eine einfachere und von Benutzungsfehlern bzw. Fehleingaben aufgrund einer falschen Erkennung von Gesten (durch das elektrische Gerät bzw. von durch einen Benutzer falsch bzw. nicht vollständig idealtypisch ausgeführte Gesten) weitgehend befreite Benutzung des elektrischen Geräts möglich ist. Andererseits sind jedoch komplexe bzw. unregelmäßige Eingabegesten, insbesondere solche Eingabegesten, die Kurven bzw. Krümmungen bzw. Rundungen aufweisen bzw. die ausschließlich aus Kurven bzw. gekrümmten Verläufen der Gesten bestehen, häufig besser intuitiv für einen Benutzer des elektrischen Geräts verständlich und auch merkbar, so dass die Steuerung des elektrischen Geräts auch unter Benutzung von unregelmäßigen Eingabegesten vorteilhaft ist.

Ferner ist ein Verfahren zur Steuerung eines elektrischen Geräts aus der Druckschrift US 2010/149115 A1 bekannt. Weitere Verfahren sind den Druckschriften US 2010/235794 A1 und US 2002/056575 A1 zu entnehmen.

### Offenbarung der Erfindung

Der Erfindung liegt die Aufgabe zugrunde, einen Weg aufzuzeigen, wie die Steuerung elektrischer Geräte, insbesondere tragbarer elektrischer Geräte und insbesondere ausgebildet als intelligentes Telefongerät oder persönlicher digitaler Assistent, sowohl unter Verwendung von geradlinigen Eingabegesten als auch unter Verwendung von unregelmäßigen Eingabegesten dahingehend weiter verbessert und insbesondere vereinfacht werden kann, dass eine möglichst fehlerfreie, einfache und intuitiv einsichtige Bedienung eines solchen elektrischen Geräts möglich ist.

Diese Aufgabe wird erfindungsgemäß dadurch gelöst, dass in einem frühen Stadium der Eingabebewegung, beispielsweise eines Fingers, auf der berührungsempfindlichen entschieden wird, ob es sich um eine geradlinige Eingabegeste handelt oder aber um eine unregelmäßige Eingabegeste.

Gemäß einer offenbarten Ausführungsform ein Verfahren zur Steuerung eines elektrischen Geräts, insbesondere eines tragbaren elektrischen Geräts, insbesondere ausgebildet als intelligentes Telefongerät oder persönlicher digitaler Assistent, mittels wenigstens einer geradlinigen Eingabegeste und wenigstens einer unregelmäßigen Eingabegeste vorgesehen, wobei jeder Eingabegeste eine jeweilige Funktion des elektrischen Geräts zugeordnet ist, wobei das elektrische Gerät eine berührungsempfindliche Fläche, insbesondere einen Touchscreen, zur Eingabe der mit einem oder mehreren Fingern eines Benutzers durchgeführten Eingabegesten aufweist, wobei das Verfahren die folgenden Schritte aufweist:
-- Erfassen eines beginnenden Verlaufs einer Eingabegeste in einem ersten Verfahrensschritt, wobei der erste Verfahrensschritt, wenigstens die drei folgenden Teilschritte umfasst:
   -- Detektieren - in einem ersten Teilschritt - einer Initialberührung der berührungsempfindlichen Fläche zu einem ersten Zeitpunkt an einem Startpunkt der Eingabegeste durch wenigstens einen Finger eines Benutzers
   -- Detektieren - in einem zweiten Teilschritt und ausgehend vom Startpunkt der Eingabegeste bis zu einem ersten Zwischenpunkt der Eingabegeste zu einem zweiten Zeitpunkt - einer ersten Initialbewegung auf der berührungsempfindlichen Fläche durch den wenigstens einen Finger des Benutzers
   -- Detektieren - in einem dritten Teilschritt und ausgehend vom ersten Zwischenpunkt der Eingabegeste bis zu einem zweiten Zwischenpunkt der Eingabegeste zu einem dritten Zeitpunkt - einer zweiten Initialbewegung auf der berührungsempfindlichen Fläche durch den wenigstens einen Finger des Benutzers,
-- Detektieren, in einem zweiten Verfahrensschritt,
-- einer unregelmäßigen Eingabegeste für den Fall, dass eine Richtungsänderung zwischen einerseits der ersten Initialbewegung und andererseits der zweiten Initialbewegung einen vorgegebenen Richtungsänderungsgrenzwert überschreitet, und
-- einer geradlinigen Eingabegeste für den Fall, dass die Richtungsänderung zwischen einerseits der ersten Initialbewegung und andererseits der zweiten Initialbewegung maximal dem vorgegebenen Richtungsänderungsgrenzwert entspricht,
-- Ausführen der jeweiligen, mit der detektierten Eingabegeste verknüpften Funktion durch das elektrische Gerät in einem dritten Verfahrensschritt.

Gemäß einer ersten Ausführungsform der vorliegenden Erfindung wird die Aufgabe gelöst durch ein Verfahren gemäß Anspruch 1,

Gemäß einer alternativen zweiten Ausführungsform der vorliegenden Erfindung wird die Aufgabe gelöst durch ein Verfahren gemäß Anspruch 2.

Es ist dadurch gemäß sowohl der ersten Ausführungsform als auch gemäß der zweiten Ausführungsform der vorliegenden Erfindung in vorteilhafter Weise möglich, dass in einfacher Weise erkannt werden kann, ob es sich bei einer Benutzerinteraktion, d.h. einer beginnenden Eingabegeste bzw. bei der Einleitung der Eingabegeste, um eine geradlinige oder um eine unregelmäßige Eingabegeste handelt. Entsprechend kann die Reaktion des elektrischen Geräts bzw. die Steuerung des elektrischen Geräts angepasst werden. Beispielsweise ist es erfindungsgemäß möglich, dass beim Erkennen einer beginnenden geradlinigen Eingabegeste eine andere Reaktion des elektrischen Geräts, insbesondere hinsichtlich des Bildschirminhalts bzw. der Darstellung des Bildschirminhalts - beispielsweise ein Verschieben des Bildschirminhalts entsprechend der Eingabebewegung -, vorgesehen sein kann als beim Erkennen einer beginnenden unregelmäßigen Eingabegeste - etwa ein Festhalten des Bildschirminhalts.

Bei der ersten Ausführungsform wird daher die unregelmäßige Eingabegeste lediglich dann erkannt, wenn im zweiten Verfahrensschritt die Einleitung der Eingabegeste mittels einer "Vorlaufberührung" (d.h. mittels der Initialberührung, der Entfernung des Fingers von der berührungsempfindlichen Fläche und des erneuten Berührens der berührungsempfindlichen Fläche) mit einer vorgegebenen "Mindestgeschwindigkeit" (des die berührungsempfindliche Fläche berührenden Fingers eines Benutzers) erfolgt bzw. höchstens eine maximale Zeit - eben die zwischen den beiden Berührungen (Initialberührung und erneute Berührung)-verstreicht.

Bei der zweiten Ausführungsform wird daher die unregelmäßige Eingabegeste lediglich dann erkannt, wenn im zweiten Verfahrensschritt die Einleitung der Eingabegeste mittels einer "Vorlaufberührung" (d.h. mittels der Initialberührung am Haltpunkt und der Detektion eines weiteren Berührens der berührungsempfindlichen Fläche an einer anderen Stelle, nämlich dem Eingabepunkt) mit einer vorgegebenen "Mindestgeschwindigkeit" (des die berührungsempfindliche Fläche berührenden Fingers eines Benutzers bzw. der die berührungsempfindliche Fläche berührenden Finger eines Benutzers) erfolgt bzw. höchstens eine maximale Zeit - eben die zwischen den beiden Berührungen (Initialberührung und weitere Berührung) - verstreicht. Gemäß der dritten Ausführungsform kann es erfindungsgemäß insbesondere entweder vorgesehen sein, dass die Vorlaufberührung aufrechterhalten bleibt, während die Eingabebewegung vom Eingabepunkt aus ausgeführt wird, so dass ein Finger des Benutzers am Haltepunkt verbleibt und zwingend ein weiterer Finger die Eingabebewegung vom Eingabepunkt aus ausführt, oder es kann vorgesehen sein, dass die Vorlaufberührung nicht aufrechterhalten bleibt, während die Eingabebewegung vom Eingabepunkt aus ausgeführt wird und somit auch der gleiche Finger die Vorlaufberührung am Haltepunkt und die Eingabebewegung vom Eingabepunkt aus durchführt.

In jedem Fall kann es gemäß sowohl der ersten Ausführungsform als auch der zweiten Ausführungsform erfindungsgemäß vorgesehen sein, dass für den Fall,
-- dass (wegen zu geringer Geschwindigkeit der Eingabegeste) keine unregelmäßige Eingabegeste erkannt wird, und
-- dass gleichzeitig aber auch keine geradlinige Eingabegeste erkannt wird, eine alternative Reaktion des elektrischen Geräts vorgesehen ist, beispielsweise eine Verschiebung des Bildschirminhalts gemäß dem Verlauf des Kontaktpunkts des Fingers des Benutzers auf der berührungsempfindlichen Fläche.

Hierdurch ist es erfindungsgemäß in vorteilhafter Weise möglich, dass besonders flexibel auf verschiedene Eingabeszenarien reagiert wird.

Erfindungsgemäß ist es gemäß der ersten Ausführungsform bevorzugt vorgesehen, dass im zweiten Verfahrensschritt die unregelmäßige Eingabegeste lediglich für den Fall erkannt wird, dass zusätzlich auch die Zeitdifferenz zwischen dem sechsten Zeitpunkt und dem fünften Zeitpunkt kleiner ist als ein weiterer vorgegebener Zeitgrenzwert.

Dies bedeutet, dass die unregelmäßige Eingabegeste lediglich dann erkannt wird, wenn im zweiten Verfahrensschritt die Einleitung der Eingabegeste mittels einer "Vorlaufberührung" (d.h. mittels der Initialberührung, der Entfernung des Fingers von der berührungsempfindlichen Fläche und des erneuten Berührens der berührungsempfindlichen Fläche) mit einer vorgegebenen "Mindestgeschwindigkeit" (des die berührungsempfindliche Fläche berührenden Fingers eines Benutzers) erfolgt bzw. eine maximale Zeit (bzw. der weitere vorgegebene Zeitgrenzwert) - eben die Zeit zwischen dem Ende der Initialberührung und dem Beginnng der erneuten Berührung - verstreicht.

Erfindungsgemäß ist es gemäß der ersten Ausführungsform bevorzugt vorgesehen, dass im zweiten Verfahrensschritt die unregelmäßige Eingabegeste lediglich für den Fall erkannt wird, dass zusätzlich auch die Zeitdifferenz zwischen dem sechsten Zeitpunkt und dem fünften Zeitpunkt kleiner ist als ein weiterer vorgegebener Zeitgrenzwert.

Dies bedeutet, dass die unregelmäßige Eingabegeste lediglich dann erkannt wird, wenn im zweiten Verfahrensschritt die Einleitung der Eingabegeste mittels einer "Vorlaufberührung" (d.h. mittels der Initialberührung, der Entfernung des Fingers von der berührungsempfindlichen Fläche und des erneuten Berührens der berührungsempfindlichen Fläche) mit einer vorgegebenen "Mindestgeschwindigkeit" (des die berührungsempfindliche Fläche berührenden Fingers eines Benutzers) erfolgt bzw. eine maximale Zeit (bzw. der weitere vorgegebene Zeitgrenzwert) - eben die Zeit zwischen dem Ende der Initialberührung und dem Beginnng der erneuten Berührung - verstreicht.

Insbesondere ist es bei der ersten Ausführungsform erfindungsgemäß bevorzugt vorgesehen, dass beim Erkennen der geradlinigen Eingabegeste ein erster Steuermodus des elektrischen Geräts benutzt wird und dass beim Erkennen der unregelmäßigen Eingabegeste ein zweiter Steuermodus des elektrischen Geräts benutzt wird.

Beispielsweise kann der erste Steuermodus dadurch gekennzeichnet sein, dass der Bildschirminhalt oder Teile davon entsprechend der Richtung der geradlinigen Eingabegeste verschoben werden, während beim zweiten Steuermodus der Bildschirminhalt nicht entsprechend der Bewegung der unregelmäßigen Eingabegeste verschoben wird.

Weiterhin ist es erfindungsgemäß sowohl bei der ersten Ausführungsform als auch bei der zweiten Ausführungsform ebenfalls bevorzugt vorgesehen, dass - im Falle des Detektierens einer unregelmäßigen Eingabegeste im zweiten Verfahrensschritt - zur Unterscheidung wenigstens einer ersten und zweiten Form der unregelmäßigen Eingabegeste voneinander in einem weiteren Teilschritt des zweiten Verfahrensschritts die unregelmäßige Eingabegeste vollständig eingegeben wird und die erste und zweite Form der unregelmäßigen Eingabegeste voneinander unterschieden werden.

Hierdurch ist es erfindungsgemäß in vorteilhafter Weise möglich, dass eine Vielzahl von verschiedenen, unregelmäßigen Eingabegesten erkannt werden können, beispielsweise gekrümmte oder abschnittsweise gekrümmte Eingabegesten, wie beispielsweise ein angedeutetes Euro-Zeichen, ein angedeutetes Dollar-Zeichen, ein angedeuteter Buchstabe S oder dergleichen.

Ferner ist es sowohl bei der ersten Ausführungsform als auch bei der zweiten Ausführungsform gemäß weiterer bevorzugter Ausführungsbeispiele der vorliegenden Erfindung auch vorgesehen,
-- dass die unregelmäßige Eingabegeste wenigstens eine in eine Richtung gekrümmte, bogenförmige Krümmung aufweist, wobei die Krümmung wenigstens abschnittsweise einen im Wesentlichen konstanten Mittelpunkt und einen im Wesentlichen konstanten Radius aufweist, bzw.
-- die unregelmäßige Eingabegeste wenigstens eine Krümmung derart aufweist, dass eine erste Teilkrümmung in eine erste Richtung und eine zweite Teilkrümmung in eine der ersten Richtung entgegengesetzte zweite Richtung gekrümmt vorgesehen ist.

Ein weiterer Gegenstand der vorliegenden Erfindung ist ein elektrisches Gerät, insbesondere ein tragbares elektrisches Gerät, insbesondere ausgebildet als intelligentes Telefongerät oder persönlicher digitaler Assistent gemäß Anspruch 6.

Ein weiterer Gegenstand der vorliegenden Erfindung ist ein elektrisches Gerät, insbesondere ein tragbares elektrisches Gerät, insbesondere ausgebildet als intelligentes Telefongerät oder persönlicher digitaler Assistent gemäß Anspruch 7.

Bevorzugt ist es erfindungsgemäß sowohl bei der ersten Ausführungsform als auch bei der zweiten Ausführungsform vorgesehen, dass das elektrische Gerät derart konfiguriert ist, dass beim Erkennen der geradlinigen Eingabegeste ein erster Steuermodus des elektrischen Geräts benutzt wird und dass beim Erkennen der unregelmäßigen Eingabegeste ein zweiter Steuermodus des elektrischen Geräts benutzt wird.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einem elektrischen Gerät ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einem elektrischen Gerät ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines elektrischen Geräts mit einer berührungsempfindlichen Fläche gemäß sämtlicher Ausführungsformen der vorliegenden Erfindung.
- **Figur 2**: zeigt schematisch die berührungsempfindliche Fläche des elektrischen Geräts sowie mehrere Möglichkeiten von geradlinigen Eingabegesten.
- **Figur 3**: zeigt schematisch die berührungsempfindliche Fläche des elektrischen Geräts sowie mehrere Möglichkeiten von unregelmäßigen Eingabegesten.
- **Figur 4**: zeigt schematisch die berührungsempfindliche Fläche des elektrischen Geräts sowie den Beginn einer unregelmäßigen Eingabegeste zur Erkennung gemäß einer offenbarten Ausführungsform.
- **Figur 5**: zeigt schematisch die berührungsempfindliche Fläche des elektrischen Geräts sowie den Beginn einer unregelmäßigen Eingabegeste zur Erkennung gemäß der ersten Ausführungsform der Erfindung.
- **Figur 6**: zeigt schematisch die berührungsempfindliche Fläche des elektrischen Geräts sowie den Beginn einer unregelmäßigen Eingabegeste zur Erkennung gemäß der dritten Ausführungsform der Erfindung.

### Ausführungsformen der Erfindung

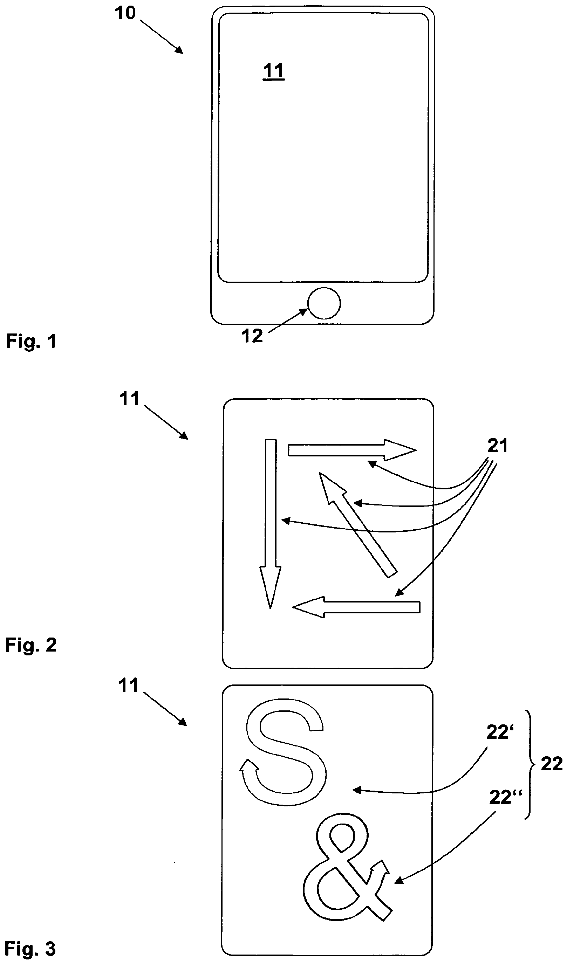

In den verschiedenen Figuren sind gleiche Teile stets mit den gleichen Bezugszeichen versehen und werden daher in der Regel auch jeweils nur einmal benannt bzw. erwähnt. In Figur 1 ist schematisch eine Ansicht eines elektrischen Geräts 10 mit einer berührungsempfindlichen Fläche 11 dargestellt. Das elektrische Gerät 10 weist gemäß des in Figur 1 dargestellten Beispiels auch ein Betätigungselement 12. Das Betätigungselement 12 ist hierbei insbesondere als physischer Schalter oder Taster ausgebildet und bewirkt bei einer Betätigung eine haptische Rückmeldung auf den Benutzer des elektrischen Geräts 10, insbesondere auf den Finger des Benutzers. Das elektrische Gerät 10 kann erfindungsgemäß auch noch weitere (nicht dargestellte) Betätigungselemente aufweisen, beispielsweise eine Mehrzahl von Taster oder Schalter, die sich beispielsweise auf der Vorderseite (d.h. derjenigen Seite des elektrischen Geräts 10, zu welcher hin die berührungsempfindliche Fläche 11 - oder aber zumindest deren größter Anteil - gerichtet ist) befinden, sich jedoch auch - zumindest teilweise - auf der Rückseite oder aber auf einer Kante bzw. Seitenfläche des elektrischen Geräts 10 befinden können.

Die berührungsempfindliche Fläche 11 ist insbesondere als eine berührungsempfindliche Fläche vorgesehen, die mit einer Bildschirmeinrichtung bzw. einer Anzeigeeinrichtung verbunden bzw. gekoppelt ist derart, dass die berührungsempfindliche Fläche 11 vor der Bildschirmeinrichtung bzw. Anzeigeeinrichtung angeordnet ist. Eine solche Anordnung wird nachfolgend auch als Touchscreen bezeichnet. Eine solche berührungsempfindliche Fläche 11 ist erfindungsgemäß insbesondere als eine quadratische oder rechteckige Fläche ausgebildet, wobei die Begrenzungen der berührungsempfindlichen Fläche rechte Winkel zueinander bilden.

In Figur 2 ist die berührungsempfindliche Fläche 11 des elektrischen Geräts 10 sowie mehrere Möglichkeiten von geradlinigen Eingabegesten 21 schematisch dargestellt. Die geradlinigen Eingabegesten können dabei beispielsweise parallel zu einer der Begrenzungen der berührungsempfindlichen Fläche 11 (und im rechten Winkel zu einer anderen Begrenzung der berührungsempfindlichen Fläche 11), aber auch in einem (nicht rechten) Winkel zu den Begrenzungen der berührungsempfindlichen Fläche 11 vorgesehen sein.

In Figur 3 ist die berührungsempfindliche Fläche 11 des elektrischen Geräts 10 sowie mehrere Möglichkeiten von unregelmäßigen Eingabegesten 22 schematisch dargestellt. Die unregelmäßigen Eingabegesten weisen dabei insbesondere eine, bevorzugt jedoch eine Mehrzahl von Krümmungen auf. Diese Krümmungen können dabei Krümmungen bzw. Biegungen aufweisen, die in (lediglich) eine Richtung verlaufen (beispielsweise (in Draufsicht auf die berührungsempfindliche Fläche 11) linksherum bzw. rechtsherum). Weiterhin können die unregelmäßigen Eingabegesten auch eine Krümmung derart aufweist, dass eine erste Teilkrümmung in eine erste Richtung und eine zweite Teilkrümmung in eine der ersten Richtung entgegengesetzte zweite Richtung gekrümmt vorgesehen ist (beispielsweise (in Draufsicht auf die berührungsempfindliche Fläche 11) die erste Teilkrümmung linksherum und die zweite Teilkrümmung rechtsherum oder aber umgekehrt). Im dargestellten Beispiel ist eine erste unregelmäßige Eingabegeste 22' als eine S-förmig verlaufende Eingabegeste vorgesehen, während eine zweite unregelmäßige Eingabegeste 22" beispielsweise als eine Eingabegeste in Form eines Kaufmannsunds vorgesehen ist.

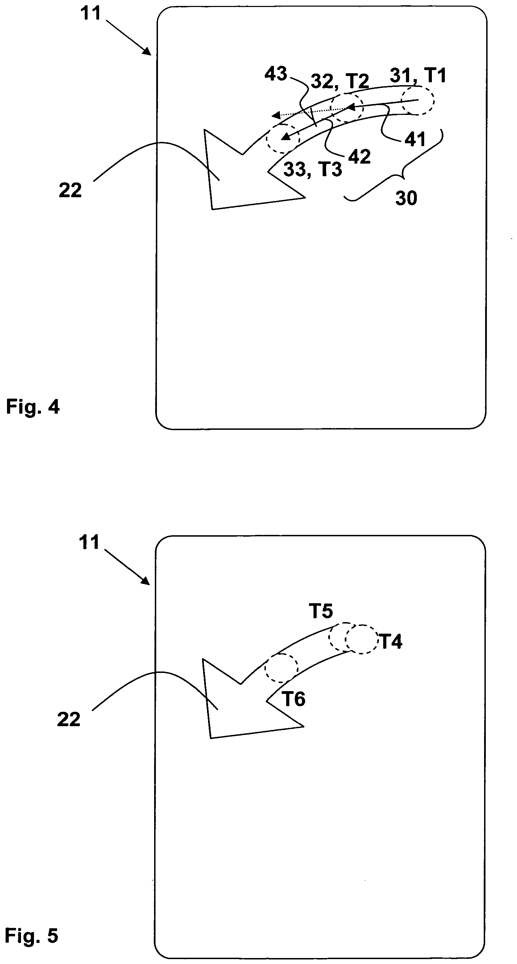

In Figur 4 ist schematisch die berührungsempfindliche Fläche 11 des elektrischen Geräts 10 mit einer Darstellung des Beginns einer unregelmäßigen Eingabegeste 22 zur Erkennung gemäß einer offenbarten Ausführungsform abgebildet. Gemäß der offenbarten Ausführungsform wird der beginnende Verlauf 30 einer Eingabegeste 21, 22 (im dargestellten Beispiel der Figur 4 einer unregelmäßigen Eingabegeste 22) in einem ersten Verfahrensschritt dadurch erfasst,
-- dass in einem ersten Teilschritt eine Initialberührung der berührungsempfindlichen Fläche 11 durch wenigstens einen Finger eines Benutzers detektiert wird,
-- dass in einem zweiten Teilschritt eine erste Initialbewegung 41 auf der berührungsempfindlichen Fläche 11 durch den wenigstens einen Finger des Benutzers detektiert wird, und
-- dass in einem dritten Teilschritt eine zweite Initialbewegung 42 auf der berührungsempfindlichen Fläche 11 durch den wenigstens einen Finger des Benutzers detektiert wird.

Der erste Teilschritt der Initialberührung der berührungsempfindlichen Fläche 11 definiert hierbei einen Startpunkt 31 der Eingabegeste 21, 22 und einen ersten Zeitpunkt T1. Der zweite Teilschritt der ersten Initialbewegung 41 auf der berührungsempfindlichen Fläche 11 ist durch die Strecke zwischen dem Startpunkt 31 und einem ersten Zwischenpunkt 32 definiert. Der erste Zwischenpunkt 32 wird zu einem zweiten Zeitpunkt T2 erreicht. Der dritte Teilschritt der zweiten Initialbewegung 42 auf der berührungsempfindlichen Fläche 11 ist durch die Strecke zwischen dem ersten Zwischenpunkt 32 und einem zweiten Zwischenpunkt 33 definiert. Der zweite Zwischenpunkt 33 wird zu einem dritten Zeitpunkt T3 erreicht.

In einem zweiten Verfahrensschritt nach dem ersten Verfahrensschritt wird die unregelmäßige Eingabegeste 22 von der geradlinigen Eingabegeste 21 unterschieden. Dies erfolgt dadurch, dass eine Richtungsänderung 43 zwischen einerseits der ersten Initialbewegung 41 und andererseits der zweiten Initialbewegung 42 berechnet wird und mit einem vorgegebenen Richtungsänderungsgrenzwert verglichen wird. Überschreitet die Richtungsänderung 43 den vorgegebenen Richtungsänderungsgrenzwert, wird eine unregelmäßige Eingabegeste 22 erkannt, unterschreitet die Richtungsänderung 43 den vorgegebenen Richtungsänderungsgrenzwert, wird eine geradlinige Eingabegeste 21 erkannt.

In einem dritten Verfahrensschritt wird die jeweilige erkannte Eingabegeste 21, 22 dadurch angewandt, dass die jeweilige mit der Eingabegeste verknüpfte Funktion des elektrischen Geräts ausgeführt wird.

Es ist besonders bevorzugt vorgesehen, dass bei der Detektion des beginnenden Verlaufs der Eingabegeste 21, 22 der erste, zweite und dritte Zeitpunkt T1, T2, T3 vorgegeben ist, beispielsweise über eine Abfragefrequenz der berührungsempfindlichen Fläche. In diesem Fall wird eine unregelmäßige Eingabegeste 22 im zweiten Verfahrensschritt lediglich dann detektiert, wenn die Streckenlänge der ersten Initialbewegung 41 (d.h. ausgehend vom Startpunkt 31 der Eingabegeste 21, 22 bis zum ersten Zwischenpunkt 32 der Eingabegeste 21, 22) und die Streckenlänge der zweiten Initialbewegung 42 (d.h. ausgehend vom ersten Zwischenpunkt 32 der Eingabegeste 21, 22 bis zum zweiten Zwischenpunkt 33 der Eingabegeste 21, 22 größer ist als ein vorgegebener Geschwindigkeitsgrenzwert.

In Figur 5 ist schematisch die berührungsempfindliche Fläche 11 des elektrischen Geräts 10 mit einer Darstellung des Beginns einer unregelmäßigen Eingabegeste 22 zur Erkennung gemäß der ersten Ausführungsform der Erfindung abgebildet. Gemäß der ersten Ausführungsform der vorliegenden Erfindung wird die Einleitung der Eingabegeste 21, 22 (im dargestellten Beispiel der Figur 5 einer unregelmäßigen Eingabegeste 22) in einem ersten Verfahrensschritt dadurch erfasst,
-- dass eine Initialberührung der berührungsempfindlichen Fläche 11 zu einem vierten Zeitpunkt T4 durch wenigstens einen Finger eines Benutzers detektiert wird,
-- dass ein Entfernen des wenigstens einen Fingers eines Benutzers von der berührungsempfindlichen Fläche 11 zu einem fünften Zeitpunkt T5 detektiert wird und
-- dass das erneute Berühren der berührungsempfindlichen Fläche 11 zu einem sechsten Zeitpunkt T6 durch den wenigstens einen Finger eines Benutzers detektiert wird und eine Bewegung des Fingers eines Benutzers auf der berührungsempfindlichen Fläche 11 detektiert wird.

Die Initialberührung der berührungsempfindlichen Fläche 11 definiert hierbei einen Startpunkt der Eingabegeste 21, 22 und einen vierten Zeitpunkt T4. Das Ende der Initialberührung (bzw. das Abheben des Fingers des Benutzers von der berührungsempfindlichen Fläche 11) definiert einen fünften Zeitpunkt T5. Das erneute Berühren der berührungsempfindlichen Fläche 11 definiert einen sechsten Zeitpunkt T6.

In einem zweiten Verfahrensschritt nach dem ersten Verfahrensschritt wird auch gemäß der ersten Ausführungsform die unregelmäßige Eingabegeste 22 von der geradlinigen Eingabegeste 21 unterschieden. Dies erfolgt erfindungsgemäß dadurch, dass für die Erkennung einer unregelmäßigen Eingabegeste 22 die Zeitdifferenz zwischen dem sechsten Zeitpunkt T6 und dem vierten Zeitpunkt T4 kleiner ist als ein vorgegebener Zeitgrenzwert (d.h. dass mit einer Mindestgeschwindigkeit (bzw. "Doppelklickgeschwindigkeit" die Initalberührung und die weitere Berührung aufeinander folgen)) und dass für die Erkennung einer geradlinigen Eingabegeste die Zeitdifferenz zwischen dem sechsten Zeitpunkt T6 und dem vierten Zeitpunkt T4 größer oder gleich ist als der vorgegebene Zeitgrenzwert.

In einem dritten Verfahrensschritt wird die jeweilige erkannte Eingabegeste 21, 22 dadurch angewandt, dass die jeweilige mit der Eingabegeste verknüpfte Funktion des elektrischen Geräts ausgeführt wird.

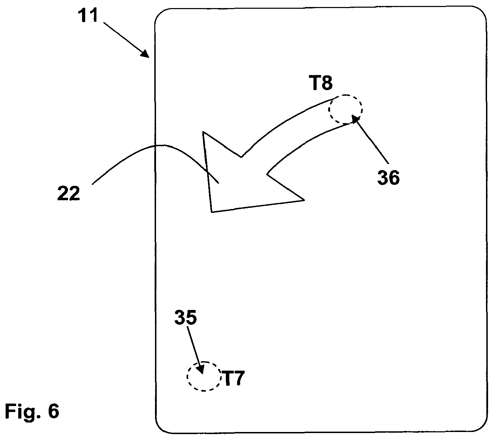

In Figur 6 ist schematisch die berührungsempfindliche Fläche 11 des elektrischen Geräts 10 mit einer Darstellung des Beginns einer unregelmäßigen Eingabegeste 22 zur Erkennung gemäß der zweiten Ausführungsform der Erfindung abgebildet. Gemäß der zweiten Ausführungsform der vorliegenden Erfindung wird die Einleitung der Eingabegeste 21, 22 (im dargestellten Beispiel der Figur 6 einer unregelmäßigen Eingabegeste 22) in einem ersten Verfahrensschritt dadurch erfasst,
-- dass eine Initialberührung der berührungsempfindlichen Fläche 11 zu einem siebten Zeitpunkt T7 durch wenigstens einen Finger eines Benutzers an einem Haltepunkt 35 der berührungsempfindlichen Fläche 11 detektiert wird und
-- dass ein weiteres Berühren der berührungsempfindlichen Fläche 11 zu einem achten Zeitpunkt T8 an einem vom Haltepunkt 35 unterschiedlichen Eingabepunkt 36 der berührungsempfindlichen Fläche 11 und durch die Detektion einer Bewegung auf der berührungsempfindlichen Fläche 11 ausgehend vom Eingabepunkt 36 detektiert wird.

Die Initialberührung der berührungsempfindlichen Fläche 11 definiert hierbei den Haltepunkt 35 und den siebten Zeitpunkt T7. Das weitere Berühren der berührungsempfindlichen Fläche 11 am Eingabepunkt 36 definiert den achten Zeitpunkt T8.

In einem zweiten Verfahrensschritt nach dem ersten Verfahrensschritt wird auch gemäß der zweiten Ausführungsform die unregelmäßige Eingabegeste 22 von der geradlinigen Eingabegeste 21 unterschieden. Dies erfolgt erfindungsgemäß dadurch, dass für die Erkennung einer unregelmäßigen Eingabegeste 22 die Zeitdifferenz zwischen dem achten Zeitpunkt T8 und dem siebten Zeitpunkt T7 kleiner ist als ein vorgegebener Zeitgrenzwert und dass für die Erkennung einer geradlinigen Eingabegeste die Zeitdifferenz zwischen dem achten Zeitpunkt T8 und dem siebten Zeitpunkt T7 größer oder gleich ist als der vorgegebene Zeitgrenzwert. Insbesondere ist es als weitere Bedingung für die Erkennung der unregelmäßigen Eingabegeste 22 gemäß der zweiten Ausführungsform erfindungsgemäß noch vorgesehen, dass die unregelmäßige Eingabegeste 22 lediglich für den Fall detektiert wird, dass die Distanz zwischen dem Haltepunkt 35 und dem Eingabepunkt 36 (auf der berührungsempfindlichen Fläche 11) größer ist als ein vorgegebener Distanzgrenzwert, d.h. eine vorgegebene Mindestdistanz, beispielsweise ein Drittel der Bildschirmdiagonale der berührungsempfindlichen Fläche 11 oder auch der Hälfte der Bildschirmdiagonale der berührungsempfindlichen Fläche 11. Gemäß der zweiten Ausführungsform der vorliegenden Erfindung kann es entweder vorgesehen sein, dass die Berührung am Haltepunkt 35 während der gesamten (oder jedenfalls doch während eines größeren Teils der) Zeit der Eingabe der unregelmäßigen Eingabegeste 22 aufrecht erhalten bleiben muss oder aber dass diese Berührung am Haltepunkt 35 lediglich eine gewisse Zeit (der vorgegebenen Berührdauer) aufrechterhalten bleiben muss, wobei die vorgegebene Berührdauer insbesondere auch kleiner gewählt sein kann als der vorgegebene weitere Zeitgrenzwert (zwischen dem achten Zeitpunkt T8 und dem siebten Zeitpunkt T7 zur Detektion der unregelmäßigen Eingabegeste 22) und es damit zumindest möglich ist, die unregelmäßige Eingabegeste 22 auch mit lediglich einem Finger des Benutzers auszuführen. Im Fall dass die Berührung am Haltepunkt 35 während der gesamten (oder jedenfalls doch während eines Teils der) Zeit der Eingabe der unregelmäßigen Eingabegeste 22 aufrecht erhalten bleiben muss, ist es zwingend erforderlich, dass der Benutzer wenigstens einen Finger und einen weiteren Finger für die unregelmäßige Eingabegeste 11 verwendet (nämlich einen Finger (mehr oder weniger dauerhaft) am Haltepunkt 35 und den weiteren Finger zur Durchführung der Eingabegeste ausgehend vom Eingabepunkt 36). In einem dritten Verfahrensschritt wird die jeweilige erkannte Eingabegeste 21, 22 dadurch angewandt, dass die jeweilige mit der Eingabegeste verknüpfte Funktion des elektrischen Geräts ausgeführt wird.

## Patentansprüche

1. Verfahren zur Steuerung eines elektrischen Geräts (10), insbesondere eines tragbaren elektrischen Geräts, insbesondere ausgebildet als intelligentes Telefongerät oder persönlicher digitaler Assistent, mittels wenigstens einer geradlinigen Eingabegeste (21) und wenigstens einer unregelmäßigen Eingabegeste (22), wobei jeder Eingabegeste (21, 22) eine jeweilige Funktion des elektrischen Geräts (10) zugeordnet ist, wobei das elektrische Gerät (10) eine berührungsempfindliche Fläche (11), insbesondere einen Touchscreen, zur Eingabe der mit einem oder mehreren Fingern eines Benutzers durchgeführten Eingabegesten (21, 22) aufweist, wobei das Verfahren die folgenden Schritte aufweist:
-- Erfassen einer Einleitung einer Eingabegeste (21, 22) in einem ersten Verfahrensschritt, wobei die Einleitung der Eingabegeste (21, 22)
-- die Detektion einer Initialberührung der berührungsempfindlichen Fläche (11) zu einem vierten Zeitpunkt (T4) durch wenigstens einen Finger eines Benutzers,
-- die Detektion des Entfernens des wenigstens einen Fingers eines Benutzers von der berührungsempfindlichen Fläche (11) zu einem fünften Zeitpunkt (T5) und
-- die Detektion des erneuten Berührens der berührungsempfindlichen Fläche (11) zu einem sechsten Zeitpunkt (T6) durch den wenigstens einen Finger eines Benutzers und Detektion einer Bewegung des Fingers eines Benutzers auf der berührungsempfindlichen Fläche (11) umfasst,
-- Detektieren, in einem zweiten Verfahrensschritt,
-- einer unregelmäßigen Eingabegeste (22) für den Fall, dass die Zeitdifferenz zwischen dem sechsten Zeitpunkt (T6) und dem vierten Zeitpunkt (T4) kleiner ist als ein vorgegebener Zeitgrenzwert, und
-- einer geradlinigen Eingabegeste (21) für den Fall, dass die Zeitdifferenz zwischen dem sechsten Zeitpunkt (T6) und dem vierten Zeitpunkt (T4) größer oder gleich ist als der vorgegebene Zeitgrenzwert,
-- Ausführen der jeweiligen, mit der detektierten Eingabegeste (21, 22) verknüpften Funktion durch das elektrische Gerät (10) in einem dritten Verfahrensschritt.

2. Verfahren zur Steuerung eines elektrischen Geräts (10), insbesondere eines tragbaren elektrischen Geräts, insbesondere ausgebildet als intelligentes Telefongerät oder persönlicher digitaler Assistent, mittels wenigstens einer geradlinigen Eingabegeste (21) und wenigstens einer unregelmäßigen Eingabegeste (22), wobei jeder Eingabegeste (21, 22) eine jeweilige Funktion des elektrischen Geräts (10) zugeordnet ist, wobei das elektrische Gerät (10) eine berührungsempfindliche Fläche (11), insbesondere einen Touchscreen, zur Eingabe der mit einem oder mehreren Fingern eines Benutzers durchgeführten Eingabegesten (21, 22) aufweist, wobei das Verfahren die folgenden Schritte aufweist:
-- Erfassen einer Einleitung einer Eingabegeste (21, 22) in einem ersten Verfahrensschritt, wobei die Einleitung der Eingabegeste (21, 22)
-- die Detektion einer Initialberührung der berührungsempfindlichen Fläche (11) zu einem siebten Zeitpunkt (T7) durch wenigstens einen Finger eines Benutzers an einem Haltepunkt (35) der berührungsempfindlichen Fläche (11),
-- die Detektion eines weiteren Berührens der berührungsempfindlichen Fläche (11) zu einem achten Zeitpunkt (T8) an einem vom Haltepunkt (35) unterschiedlichen Eingabepunkt (36) der berührungsempfindlichen Fläche (11) und Detektion einer Bewegung auf der berührungsempfindlichen Fläche (11) ausgehend vom Eingabepunkt (36)
umfasst,
-- Detektieren, in einem zweiten Verfahrensschritt,
-- einer unregelmäßigen Eingabegeste (22) für den Fall, dass die Zeitdifferenz zwischen dem achten Zeitpunkt (T8) und dem siebten Zeitpunkt (T7) kleiner ist als ein vorgegebener weiterer Zeitgrenzwert, und
-- einer geradlinigen Eingabegeste (21) für den Fall, dass die Zeitdifferenz zwischen dem achten Zeitpunkt (T8) und dem siebten Zeitpunkt (T7) größer oder gleich ist als der vorgegebene weitere Zeitgrenzwert,
-- Ausführen der jeweiligen, mit der detektierten Eingabegeste (21, 22) verknüpften Funktion durch das elektrische Gerät (10) in einem dritten Verfahrensschritt.

3. Verfahren nach einem der vorhergehenden Ansprüche, **dadurch gekennzeichnet, dass** beim Erkennen der geradlinigen Eingabegeste (21) ein erster Steuermodus des elektrischen Geräts (10) benutzt wird und dass beim Erkennen der unregelmäßigen Eingabegeste (22) ein zweiter Steuermodus des elektrischen Geräts (10) benutzt wird.

4. Verfahren nach einem der vorhergehenden Ansprüche, **dadurch gekennzeichnet, dass** die unregelmäßige Eingabegeste (22) wenigstens eine in eine Richtung gekrümmte, bogenförmige Krümmung aufweist, wobei die Krümmung wenigstens abschnittsweise einen im Wesentlichen konstanten Mittelpunkt und einen im Wesentlichen konstanten Radius aufweist.

5. Verfahren nach einem der vorhergehenden Ansprüche, **dadurch gekennzeichnet, dass** die unregelmäßige Eingabegeste (22) wenigstens eine Krümmung derart aufweist, dass eine erste Teilkrümmung in eine erste Richtung und eine zweite Teilkrümmung in eine der ersten Richtung entgegengesetzte zweite Richtung gekrümmt vorgesehen ist.

6. Elektrisches Gerät (10), insbesondere ein tragbares elektrisches Gerät, insbesondere ausgebildet als intelligentes Telefongerät oder persönlicher digitaler Assistent, wobei das elektrische Gerät (10) eine berührungsempfindliche Fläche (11), insbesondere einen Touchscreen, aufweist und zur Steuerung mittels wenigstens einer geradlinigen Eingabegeste (21) und wenigstens einer unregelmäßigen Eingabegeste (22) konfiguriert ist, wobei das elektrische Gerät (10) weiterhin derart konfiguriert ist, dass jeder Eingabegeste (21, 22) eine jeweilige Funktion des elektrischen Geräts (10) zugeordnet ist und die jeweilige Funktion nach einer Detektion der Eingabegeste (21, 22) ausgeführt wird, wobei das elektrische Gerät (10) zur Steuerung mittels Eingabe der mit einem oder mehreren Fingern eines Benutzers durchgeführten Eingabegesten (21, 22) konfiguriert ist:
-- wobei das elektrische Gerät (10) zum Erfassen einer Einleitung einer Eingabegeste (21, 22) derart konfiguriert ist,
-- dass eine Initialberührung der berührungsempfindlichen Fläche (11) zu einem vierten Zeitpunkt (T4) durch wenigstens einen Finger eines Benutzers vorgesehen ist,
-- dass ein Entfernen des wenigstens einen Fingers eines Benutzers von der berührungsempfindlichen Fläche (11) zu einem fünften Zeitpunkt (T5) vorgesehen ist und
-- dass ein erneutes Berühren der berührungsempfindlichen Fläche (11) zu einem sechsten Zeitpunkt (T6) durch den wenigstens einen Finger eines Benutzers sowie eine Bewegung des Fingers eines Benutzers auf der berührungsempfindlichen Fläche (11) vorgesehen ist,
-- wobei ferner das elektrische Gerät (10),
-- zur Detektion einer unregelmäßigen Eingabegeste (22) für den Fall konfiguriert ist, dass die Zeitdifferenz zwischen dem sechsten Zeitpunkt (T6) und dem vierten Zeitpunkt (T4) kleiner ist als ein vorgegebener Zeitgrenzwert, und
-- zur Detektion einer geradlinigen Eingabegeste (21) für den Fall konfiguriert ist, dass die Zeitdifferenz zwischen dem sechsten Zeitpunkt (T6) und dem vierten Zeitpunkt (T4) größer oder gleich ist als der vorgegebene Zeitgrenzwert.

7. Elektrisches Gerät (10), insbesondere ein tragbares elektrisches Gerät, insbesondere ausgebildet als intelligentes Telefongerät oder persönlicher digitaler Assistent, wobei das elektrische Gerät (10) eine berührungsempfindliche Fläche (11), insbesondere einen Touchscreen, aufweist und zur Steuerung mittels wenigstens einer geradlinigen Eingabegeste (21) und wenigstens einer unregelmäßigen Eingabegeste (22) konfiguriert ist, wobei das elektrische Gerät (10) weiterhin derart konfiguriert ist, dass jeder Eingabegeste (21, 22) eine jeweilige Funktion des elektrischen Geräts (10) zugeordnet ist und die jeweilige Funktion nach einer Detektion der Eingabegeste (21, 22) ausgeführt wird, wobei das elektrische Gerät (10) zur Steuerung mittels Eingabe der mit einem oder mehreren Fingern eines Benutzers durchgeführten Eingabegesten (21, 22) konfiguriert ist:
-- wobei das elektrische Gerät (10) zum Erfassen einer Einleitung einer Eingabegeste (21, 22) derart konfiguriert ist,
-- dass eine Initialberührung der berührungsempfindlichen Fläche (11) zu einem siebten Zeitpunkt (T7) durch wenigstens einen Finger eines Benutzers an einem Haltepunkt (35) der berührungsempfindlichen Fläche (11) vorgesehen ist,
-- dass die Detektion eines weiteren Berührens der berührungsempfindlichen Fläche (11) zu einem achten Zeitpunkt (T8) an einem vom Haltepunkt (35) unterschiedlichen Eingabepunkt (36) der berührungsempfindlichen Fläche (11) und Detektion einer Bewegung auf der berührungsempfindlichen Fläche (11) ausgehend vom Eingabepunkt (36) vorgesehen ist,
-- wobei ferner das elektrische Gerät (10),
-- zur Detektion einer unregelmäßigen Eingabegeste (22) für den Fall konfiguriert ist, dass die Zeitdifferenz zwischen dem achten Zeitpunkt (T8) und dem siebten Zeitpunkt (T7) kleiner ist als ein vorgegebener weiterer Zeitgrenzwert, und
-- zur Detektion einer geradlinigen Eingabegeste (21) für den Fall konfiguriert ist, dass die Zeitdifferenz zwischen dem achten Zeitpunkt (T8) und dem siebten Zeitpunkt (T7) größer oder gleich ist als der vorgegebene weitere Zeitgrenzwert.

8. Elektrisches Gerät (10) nach Anspruch 6 oder 7, **dadurch gekennzeichnet, dass** das elektrische Gerät (10) derart konfiguriert ist, dass beim Erkennen der geradlinigen Eingabegeste (21) ein erster Steuermodus des elektrischen Geräts (10) benutzt wird und dass beim Erkennen der unregelmäßigen Eingabegeste (22) ein zweiter Steuermodus des elektrischen Geräts (10) benutzt wird.

9. Computerprogramm mit Programmcodemitteln, mit deren Hilfe alle Schritte eines Verfahrens nach einem der Ansprüche 1 bis 5 durchführbar sind, wenn das Computerprogramm auf einem elektrischen Gerät (10) ausgeführt wird.

10. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 5 durchführbar sind, wenn das Computerprogramm auf einem elektrischen Gerät (10) ausgeführt wird.

## Claims

1. Method for controlling an electric device (10), in particular a portable electric device, in particular that is configured as an intelligent telephone device or personal digital assistant, by means of at least one straight input gesture (21) and at least one irregular input gesture (22), wherein each input gesture (21, 22) is allocated a respective function of the electric device (10), wherein the electric device (10) comprises a touch sensitive surface (11), in particular a touch screen, for inputting the input gestures (21, 22) that are performed using one or multiple fingers of a user, wherein the method comprises the following steps:
- ascertaining an initiation of an input gesture (21, 22) in a first method step, wherein the procedure of initiating the input gesture (21, 22) comprises
- detecting that the touch sensitive surface (11) is initially touched at a fourth point in time (T4) by means of at least one finger of a user,
- detecting that the at least one finger of a user is removed from the touch sensitive surface (11) at a fifth point in time (T5) and
- detecting that the touch sensitive surface (11) is again touched at a sixth point in time (T6) by means of the at least one finger of a user and detecting a movement of the finger of a user on the touch sensitive surface (11).
- detecting in a second method step
- an irregular input gesture (22) for the case that the time difference between the sixth point in time (T6) and the fourth point in time (T4) is smaller than a predetermined time limit value, and
- a straight input gesture (21) for the case that the time difference between the sixth point in time (T6) and the fourth point in time (T4) is greater than or equal to the predetermined time limit value,
- performing in a third method step by means of the electric device (10) the respective function that is linked to the input gesture (21, 22) that is detected.

2. Method for controlling an electric device (10), in particular of a portable electrical device, in particular that is configured as an intelligent telephone device or personal digital assistant, by means of at least one straight input gesture (21) and at least one irregular input gesture (22), wherein each input gesture (21, 22) is allocated a respective function of the electric device (10), wherein the electric device (10) comprises a touch sensitive surface (11), in particular a touch screen, for inputting the input gestures (21, 22) that are performed using one or multiple fingers of a user, wherein the method comprises the following steps:
- ascertaining an initiation of an input gesture (21, 22) in a first method step, wherein the procedure of initiating the input gesture (21, 22) comprises
- detecting that the touch sensitive surface (11) is initially touched at a seventh point in time (T7) by means of at least one finger of a user at a holding point (35) of the touch sensitive surface (11),
- detecting that the touch sensitive surface (11) is again touched at an eighth point in time (T8) on an input point (36) of the touch sensitive surface (11), said input point being different from the holding point (35), and detecting a movement on the touch sensitive surface (11) starting from the input point (36),
- detecting in a second method step
- an irregular input gesture (22) for the case that the time difference between the eighth point in time (T8) and the seventh point in time (T7) is smaller than a predetermined further time limit value, and
- a straight input gesture (21) for the case that the time difference between the eighth point in time (T8) and the seventh point in time (T7) is greater than or equal to the predetermined further time limit value,
- performing in a third method step by means of the electric device (10) the respective function that is linked to the input gesture (21, 22) that is detected.

3. Method according to any one of the preceding claims, **characterised in that** a first control mode of the electric device (10) is used when identifying the straight input gesture (21) and that a second control mode of the electric device (10) is used when identifying the irregular input gesture (22).

4. Method according to any one of the preceding claims, **characterised in that** the irregular input gesture (22) comprises at least one curve that is curved in a bow-shaped manner in one direction, wherein the curve comprises at least in sections an essentially constant centre point and an essentially constant radius.

5. Method according to any one of the preceding claims, **characterised in that** the irregular input gesture (22) comprises at least one curve in such a manner that a first part curve is provided in a curved manner in a first direction and a second part curve is provided in a curved manner in a second direction that is opposite the first direction.

6. Electric device (10), in particular a portable electric device, in particular that is configured as an intelligent telephone device or personal digital assistant, wherein the electric device (10) comprises a touch sensitive surface (11), in particular a touch screen, and is configured so as to perform a control procedure by means of at least one straight input gesture (21) and at least one irregular input gesture (22), wherein the electric device (10) is furthermore configured in such a manner that each input gesture (21, 22) is allocated a respective function of the electric device (10) and the respective function is performed after detecting the input gesture (21, 22), wherein the electric device (10) is configured so as to perform a control procedure by means of inputting the input gestures (21, 22) that are performed using one or multiple fingers of a user:
- wherein the electric device (10) is configured so as to ascertain an initiation of an input gesture (21, 22) in such a manner that it is provided that:
- the touch sensitive surface (11) is initially touched at a fourth point in time (T4) by means of at least one finger of a user,
- the at least one finger of a user is removed from the touch sensitive surface (11) at a fifth point in time (T5) and
- the touch sensitive surface (11) is touched again at a sixth point in time (T6) by means of the at least one finger of a user and also a movement of the finger of a user on the touch sensitive surface (11),
- wherein moreover the electric device (10),
- is configured so as to detect an irregular input gesture (22) for the case that the time difference between the sixth point in time (T6) and the fourth point in time (T4) is smaller than a predetermined time limit value, and
- is configured so as to detect a straight input gesture (21) for the case that the time difference between the sixth point in time (T6) and the fourth point in time (T4) is greater than or equal to the predetermined time limit value.

7. Electrical device (10), in particular a portable electric device, in particular configured as an intelligent telephone device or personal digital assistant, wherein the electric device (10) comprises a touch sensitive surface (11), in particular a touch screen and is configured so as to perform a control procedure by means of at least one straight input gesture (21) and at least one irregular input gesture (22), wherein the electric device (10) furthermore is configured in such a manner that each input gesture (21, 22) is allocated a respective function of the electric device (10) and the respective function is performed after detecting the input gesture (21, 22), wherein the electric device (10) is configured so as to perform a control procedure by means of inputting the input gestures (21, 22) that are performed using one or multiple fingers of a user:
- wherein the electric device (10) is configured so as to ascertain an initiation of an input gesture (21, 22) in such a manner that it is provided:
- that the touch sensitive surface (11) is initially touched at a seventh point in time (T7) by means of at least one finger of a user at a holding point (35) of the touch sensitive surface (11),
- that it is detected that the touch sensitive surface (11) is again touched at an eighth point in time (T8) on an input point (36) of the touch sensitive surface (11), said input point being different from the holding point (35), and a movement on the touch sensitive surface (11) starting from the input point (36) is detected,
- wherein moreover the electric device (10),
- is configured so as to detect an irregular input gesture (22) for the case that the time difference between the eighth point in time (T8) and the seventh point in time (T7) is smaller than a predetermined further time limit value, and
- is configured so as to detect a straight input gesture (21) for the case that the time difference between the eighth point in time (T8) and the seventh point in time (T7) is greater than or equal to the predetermined further time limit value.

8. Electric device (10) according to claim 6 or 7, **characterised in that** the electric device (10) is configured in such a manner that a first control mode of the electric device (10) is used when identifying the straight input gesture (21) and that a second control mode of the electric device (10) is used when identifying the irregular input gesture (22).

9. Computer program having program coding means with the aid of which all steps of a method according to any one of the claims 1 to 5 can be performed if the computer program is executed on an electric device (10).

10. Computer program product having a computer-readable medium and a computer program that is stored on the computer-readable medium, said computer program having program code means that are suitable for being able to perform all the steps of a method according to any one of the claims 1 to 5 if the computer program is executed on an electric device (10).

## Revendications

1. Procédé de commande d'un appareil électrique (10), en particulier d'un appareil électrique portatif, en particulier configuré sous la forme d'un téléphone intelligent ou d'un assistant numérique personnel, au moyen d'au moins un geste d'entrée rectiligne (21) et d'au moins un geste d'entrée irrégulier (22), dans lequel à chaque geste d'entrée (21, 22) est associée une fonction respective de l'appareil électrique (10), l'appareil électrique (10) présentant une surface à commande tactile (11), en particulier un écran tactile (touchscreen), pour entrer les gestes d'entrée (21, 22) exécutés à l'aide d'un ou de plusieurs doigts d'un utilisateur, le procédé présentant les étapes suivantes :
- enregistrer le début d'un geste d'entrée (21, 22) dans une première étape de procédé, le début du geste d'entrée (21, 22) comprenant :
- la détection d'un contact initial de la surface à commande tactile (11) vers un quatrième point cible (T4) par au moins un doigt d'un utilisateur,
- la détection de l'éloignement de l'au moins un doigt d'un utilisateur depuis la surface à commande tactile (11) vers un cinquième point cible (T5) et
- la détection du nouveau contact de la surface à commande tactile (11) vers un sixième point cible (T6) par l'au moins un doigt d'un utilisateur et la détection d'un mouvement du doigt d'un utilisateur sur la surface à commande tactile (11),
- détecter, dans une seconde étape de procédé,
- un geste d'entrée irrégulier (22) dans le cas où la différence temporelle entre le sixième point cible (T6) et le quatrième point cible (T4) est inférieure à une valeur de limite temporelle prédéfinie, et
- un geste d'entrée rectiligne(21) dans le cas où la différence temporelle entre le sixième point cible (T6) et le quatrième point cible (T4) est supérieure ou égale à la valeur de limite temporelle prédéfinie,
- exécuter la fonction respective associée au geste d'entrée détecté (21, 22) par le biais de l'appareil électrique (10) dans une troisième étape de procédé.

2. Procédé de commande d'un appareil électrique (10), en particulier d'un appareil électrique portatif, en particulier configuré sous la forme d'un téléphone intelligent ou d'un assistant numérique personnel, au moyen d'au moins un geste d'entrée rectiligne (21) et d'au moins un geste d'entrée irrégulier (22), dans lequel à chaque geste d'entrée (21, 22) est associée une fonction respective de l'appareil électrique (10), l'appareil électrique (10) présentant une surface à commande tactile (11), en particulier un écran tactile (touchscreen), pour entrer les gestes d'entrée (21, 22) exécutés à l'aide d'un ou de plusieurs doigts d'un utilisateur, le procédé présentant les étapes suivantes :
- enregistrer le début d'un geste d'entrée (21, 22) dans une première étape de procédé, le début du geste d'entrée (21, 22) comprenant :
- la détection d'un contact initial de la surface à commande tactile (11) vers un septième point cible (T7) par au moins un doigt d'un utilisateur sur un point d'arrêt (35) de la surface à commande tactile (11),
- la détection d'un autre contact de la surface à commande tactile (11) vers un huitième point cible (T8) sur un point d'entrée (36) de la surface à commande tactile (11) qui est différent du point d'arrêt (35) et la détection d'un mouvement sur la surface à commande tactile (11) à partir du point d'entrée (36),
- détecter, dans une seconde étape de procédé,
- un geste d'entrée irrégulier (22) dans le cas où la différence temporelle entre le huitième point cible (T8) et le septième point cible (T7) est inférieure à une valeur de limite temporelle prédéfinie, et
- un geste d'entrée rectiligne(21) dans le cas où la différence temporelle entre le huitième point cible (T8) et le septième point cible (T7) est supérieure ou égale à l'autre valeur de limite temporelle prédéfinie,
- exécuter la fonction respective associée au geste d'entrée détecté (21, 22) par le biais de l'appareil électrique (10) dans une troisième étape de procédé.

3. Procédé selon une quelconque des revendications précédentes, **caractérisé en ce que**, lors de la reconnaissance du geste d'entrée rectiligne (21), un premier mode de commande de l'appareil électrique (10) est utilisé et **en ce que**, lors de la reconnaissance du geste d'entrée irrégulier (22), un second mode de commande de l'appareil électrique (10) est utilisé.

4. Procédé selon une quelconque des revendications précédentes, **caractérisé en ce que** le geste d'entrée irrégulier (22) présente au moins une courbure en forme d'arc, courbée dans une direction, la courbure présentant au moins par endroits un centre sensiblement constant et un rayon sensiblement constant.

5. Procédé selon une quelconque des revendications précédentes, **caractérisé en ce que** le geste d'entrée irrégulier (22) présente au moins une courbure de telle sorte qu'une première courbure partielle est prévue courbée dans une première direction et une seconde courbure partielle dans une seconde direction opposée à la première direction.

6. Appareil électrique (10), en particulier appareil électrique portatif, en particulier configuré sous la forme d'un téléphone intelligent ou d'un assistant numérique personnel, l'appareil électrique (10) présentant une surface à commande tactile (11), en particulier un écran tactile (touchscreen), et étant configuré pour commander au moyen d'au moins un geste d'entrée rectiligne (21) et d'au moins un geste d'entrée irrégulier (22), l'appareil électrique (10) étant en outre configuré de telle sorte qu'à chaque geste d'entrée (21, 22) est associée une fonction respective de l'appareil électrique (10) et la fonction respective est exécutée après une détection du geste d'entrée (21, 22), l'appareil électrique (10) étant configuré pour commander au moyen d'une entrée des gestes d'entrée (21, 22) exécutés avec un ou plusieurs doigts d'un utilisateur :
- dans lequel l'appareil électrique (10) est configuré pour enregistrer le début d'un geste d'entrée (21, 22) de telle sorte :
- qu'un contact initial de la surface à commande tactile (11) vers un quatrième point cible (T4) par au moins un doigt d'un utilisateur est prévu,
- que l'éloignement de l'au moins un doigt d'un utilisateur depuis la surface à commande tactile (11) vers un cinquième point cible (T5) est prévu, et
- qu'un nouveau contact de la surface à commande tactile (11) vers un sixième point cible (T6) par l'au moins un doigt d'un utilisateur ainsi qu'un mouvement du doigt d'un utilisateur sur la surface à commande tactile (11) est prévu,
- dans lequel l'appareil électrique (10) est configuré
- pour détecter un geste d'entrée irrégulier (22) dans le cas où la différence temporelle entre le sixième point cible (T6) et le quatrième point cible (T4) est inférieure à une valeur de limite temporelle prédéfinie, et
- pour détecter un geste d'entrée rectiligne (21) dans le cas où la différence temporelle entre le sixième point cible (T6) et le quatrième point cible (T4) est supérieure ou égale à la valeur de limite temporelle prédéfinie.

7. Appareil électrique (10), en particulier appareil électrique portatif, en particulier configuré sous la forme d'un téléphone intelligent ou d'un assistant numérique personnel, l'appareil électrique (10) présentant une surface à commande tactile (11), en particulier un écran tactile (touchscreen), et étant configuré pour commander au moyen d'au moins un geste d'entrée rectiligne (21) et d'au moins un geste d'entrée irrégulier (22), l'appareil électrique (10) étant en outre configuré de telle sorte qu'à chaque geste d'entrée (21, 22) est associée une fonction respective de l'appareil électrique (10) et la fonction respective est exécutée après une détection du geste d'entrée (21, 22), l'appareil électrique (10) étant configuré pour commander au moyen d'une entrée des gestes d'entrée (21, 22) exécutés avec un ou plusieurs doigts d'un utilisateur :
- dans lequel l'appareil électrique (10) est configuré pour enregistrer le début d'un geste d'entrée (21, 22) de telle sorte :
- qu'un contact initial de la surface à commande tactile (11) vers un septième point cible (T7) par au moins un doigt d'un utilisateur sur un point d'arrêt (35) de la surface à commande tactile (11) est prévu,
- que la détection d'un autre contact de la surface à commande tactile (11) vers un huitième point cible (T8) sur un point d'entrée (36) de la surface à commande tactile (11) qui est différent du point d'arrêt (35) et la détection d'un mouvement sur la surface à commande tactile (11) à partir du point d'entrée (36) est prévue,
- dans lequel l'appareil électrique (10) est en outre configuré
- pour détecter un geste d'entrée irrégulier (22) dans le cas où la différence temporelle entre le huitième point cible (T8) et le septième point cible (T7) est inférieure à une autre valeur de limite temporelle prédéfinie, et
- pour détecter un geste d'entrée rectiligne (21) dans le cas où la différence temporelle entre le huitième point cible (T8) et le septième point cible (T7) est supérieure ou égale à l'autre valeur de limite temporelle prédéfinie.

8. Appareil électrique (10) selon la revendication 6 ou 7, **caractérisé en ce que** l'appareil électrique (10) est configuré de telle sorte que, lors de la reconnaissance du geste d'entrée rectiligne (21), un premier mode de commande de l'appareil électrique (10) est utilisé et **en ce que**, lors de la reconnaissance du geste d'entrée irrégulier (22), un second mode de commande de l'appareil électrique (10) est utilisé.

9. Programme informatique avec des moyens de code de programme qui permettent de mettre en oeuvre toutes les étapes d'un procédé selon une des revendications 1 à 5, lorsque le programme informatique est exécuté sur un appareil électrique (10).

10. Produit de programme informatique avec un support lisible par ordinateur et un programme informatique avec des moyens de code de programme enregistré sur le support lisible par ordinateur, qui sont adaptés à ce que toutes les étapes d'un procédé selon une des revendications 1 à 5 puissent être mises en oeuvre, lorsque le programme informatique est exécuté sur un appareil électrique (10).
